# EUROPEAN PATENT APPLICATION

(11) **EP 3 361 395 A1**
(43) Date of publication of application: **15.08.2018**
(21) Application number: 17163399.3
(22) Date of filing: 28.03.2017
(51) Int. Cl.: G06F 17/30

(54) **METHODS AND SYSTEMS FOR CLASSIFICATION OF HETEROGENEOUS CLOUDS**

(30) Priority: 14.02.2017 US 201715432570
(71) Applicant: Wipro Limited, 560 035 Karnataka (IN)
(72) Inventor: SHAH, Vikas, Pennsylvania,, 19460, (US)
(74) Representative: Finnegan Europe LLP

(57) **Abstract**

This disclosure relates to a method of classification of heterogeneous computing clouds. The method includes identifying a plurality of clouds required to execute a plurality of service applications, wherein the plurality of clouds correspond to heterogeneous clouds. The method further includes defining an integration specification comprising at least one characteristic associated with integration of at least one service application from the plurality of service applications with the plurality of clouds. The method further includes analyzing the at least one characteristic of the integration specification to determine at least one logical binding feature between the at least one service application and the plurality of clouds. The method further includes classifying the plurality of clouds for the at least one service application based on the at least one logical binding feature.

## Description

### Technical Field

This disclosure relates generally to heterogeneous clouds and more particularly to methods and systems for classification of heterogeneous clouds.

### Background

Heterogeneous cloud computing has become increasingly prevalent, providing end-users with temporary access to scalable computational resources. However, traditionally, computing cloud providers such as Amazon and Rackspace provide users with access to a homogeneous set of commodity hardware, with details of the hardware obscured through virtualization technology and little or no control of locality. By contrast, end-users are demanding to obtain access to a heterogeneous set of resources, such as different SmartThings, Internet of Things (IoT) devices, accelerators, machine architectures, and network interconnects.

Different types of computing clouds (the terms 'cloud and 'clouds used herein refer to such computing clouds) are usually governed by different cloud dynamics processes and have different microphysical properties, which results in different cloud characteristics. Functional changes of the specific resources or participants of cloud can result in changing integration characteristics and changing properties of a cloud type. The combination of them determines the change of the role of clouds in the global operations. Entities such as government, commercial organizations, providers, and consumers may face difficulty to accurately distinguish among different heterogeneous clouds and their changing dynamics until localized dimensions can properly represent the processes and intelligent integration mechanisms of controlling as well as utilizing different cloud types, their properties, and their resources/ participants.

### SUMMARY

In one embodiment, a method for classification of heterogeneous computing clouds is disclosed. The method includes identifying, by a cloud classification device, a plurality of clouds required to execute a plurality of service applications, wherein the plurality of clouds correspond to heterogeneous clouds; defining, by the cloud classification device, an integration specification comprising at least one characteristic associated with integration of at least one service application from the plurality of service applications with the plurality of clouds; analyzing, by the cloud classification device, the at least one characteristic of the integration specifications to determine at least one logical binding feature between the at least one service application and the plurality of clouds; and classifying, by the cloud classification device, the plurality of clouds for the at least one service application based on the at least one logical binding feature.

In another embodiment, a cloud classification device for classification of heterogeneous computing clouds is disclosed. The enterprise network device includes a processor; and a memory communicatively coupled to the processor, wherein the memory stores processor instructions, which, on execution, causes the processor to identify a plurality of clouds required to execute a plurality of service applications, wherein the plurality of clouds correspond to heterogeneous clouds; define an integration specification comprising at least one characteristic associated with integration of at least one service application from the plurality of service applications with the plurality of clouds; analyze the at least one characteristic of the integration specifications to determine at least one logical binding feature between the at least one service application and the plurality of clouds; and classify the plurality of clouds for the at least one service application based on the at least one logical binding feature.

In yet another embodiment, a non-transitory computer-readable storage medium is disclosed. The non-transitory computer-readable storage medium has instructions stored thereon, a set of computer-executable instructions causing a computer comprising one or more processors to perform steps comprising identifying, by a cloud classification device, a plurality of clouds required to execute a plurality of service applications, wherein the plurality of clouds correspond to heterogeneous clouds; defining, by the cloud classification device, an integration specification comprising at least one characteristic associated with integration of at least one service application from the plurality of service applications with the plurality of clouds; analyzing, by the cloud classification device, the at least one characteristic of the integration specifications to determine at least one logical binding feature between the at least one service application and the plurality of clouds; and classifying, by the cloud classification device, the plurality of clouds for the at least one service application based on the at least one logical binding feature.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates an environment in which various embodiments of a system for classification of a plurality of clouds may be implemented.
**FIG. 2** is a block diagram illustrating various modules in a memory of a cloud classification device configured to classify a plurality of clouds, in accordance with an embodiment.
**FIG. 3** illustrates a flowchart of a method for classifying a plurality of clouds, in accordance with an embodiment.
**FIG. 4** illustrates a block diagram of an exemplary computer system for implementing various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

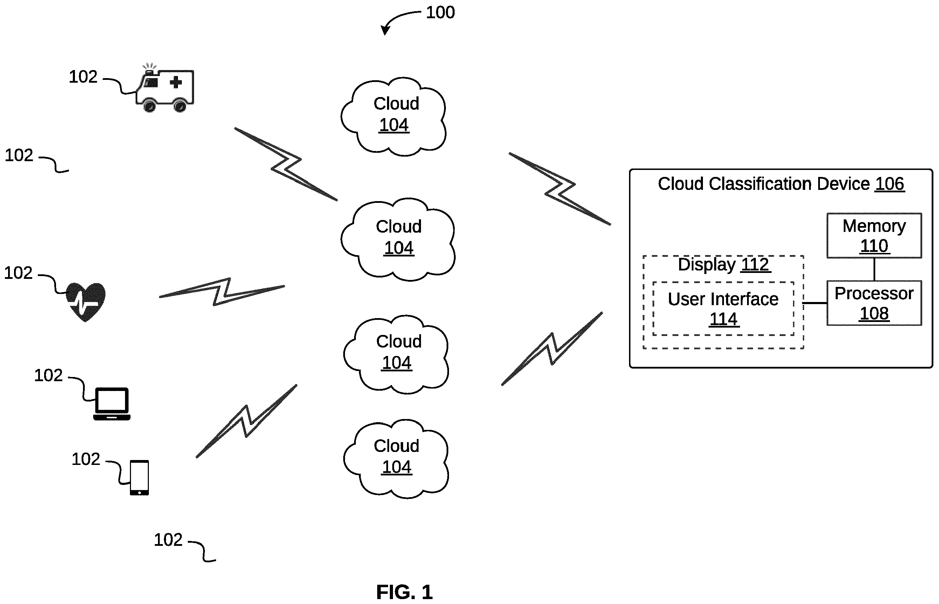

Additional illustrative embodiments are listed below. In one embodiment, an environment 100 in which various embodiments for classification a plurality of clouds may function is illustrated in FIG. 1. Environment 100 includes a plurality of client devices 102 that communicate, via, wired or wireless communication means, with a plurality of clouds 104. Examples of plurality of client devices 102 may include, but are not limited to, a car, an ambulance, a smart watch, a patient monitoring device, a smart phone, a laptop, a phablet, a tablet or any device that includes communication and computational means. In an implementation, plurality of clouds 104 may correspond to heterogeneous clouds and the examples may include, but are not limited to, a Human Resource (HR) cloud, an Internet of Things (IoT) cloud, a manufacturing supply-chain cloud, a billing cloud, an industry 4.0 cloud, a healthcare cloud, a government cloud, an autonomous cloud, a commerce cloud, a logistics cloud, a transportation cloud, a robotic cloud, and a service next cloud.

In order to execute service applications, entities such as government, commercial organizations, providers, and/or consumers, communicate with one or more of plurality of clouds 104 to access a heterogeneous set of resources, which may include, but are not limited to different SmartThings, loT devices, sensors, actuators, radio frequency identification devices, smart meters, smart security devices, smart alarms, accelerators, machine architectures, and network interconnects. The communication may be based on plurality of client devices 102. Example of a service application may include, but are not limited to, a heartbeat monitoring and notification for patient having a pacemaker, a monitoring and controlling of car speed, an automation flow for manufacturing products at remote location, a computation of finances of a supply-chain for billing and invoices, a monitoring home security system, and a generation of statistics of smart meters in a specified proximity. Plurality of clouds 104 provide a combination of Software as a Service (SaaS), Platform as a Service (PaaS), and Infrastructure as a Service (IaaS) to these entities. Thus, one or more of plurality of clouds 104 in combination hide the complexities and details of underlying infrastructure from users and applications by providing very simple graphical interface or Applications Programming Interface (API).

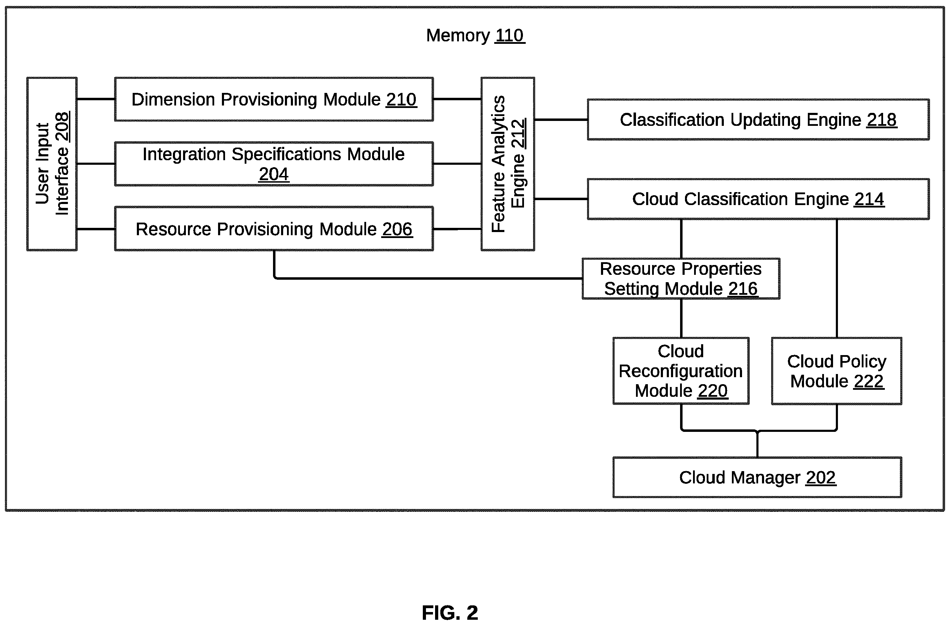

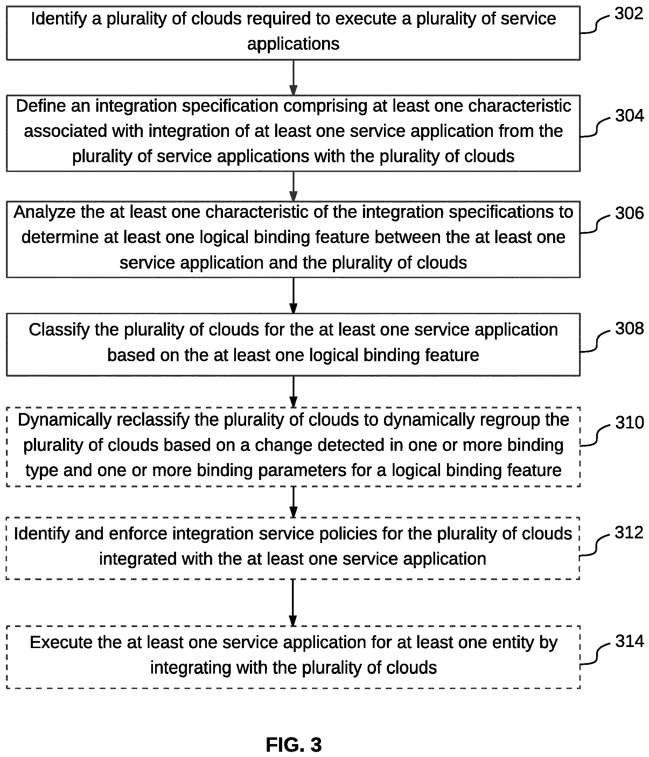

The aforementioned entities may face difficulty to accurately distinguish amongst plurality of clouds 104 and their changing dynamics. Thus, in order to ensure smooth execution of service applications, a cloud classification device 106 classifies plurality of clouds 104. To this end, cloud classification device 106 includes a processor 108 that is communicatively coupled to a memory 110. Memory 110 further includes various modules that enable cloud classification device 106 to classify plurality of clouds 104 that are heterogeneous. This is explained in detail in conjunction with FIG. 2. Cloud classification device 106 may further include a display 112 having a User Interface (UI) 114 that may be used by a user of an entity to interact with cloud classification device 106, and provide information required for classification of plurality of clouds 104. A person of ordinary skill in the art will appreciate that an entity may be associated with at least a cloud of the plurality of clouds 104.Referring now to FIG. 2, a block diagram of various modules stored in memory 110 of cloud classification device 106 that is configured to classify plurality of clouds 104 is illustrated, in accordance with an embodiment. The elements of FIG. 2 have been explained in conjunction with the elements of FIG. 1. To classify plurality of clouds 104, a cloud manager 202 first identifies the plurality of clouds that are heterogeneous and are required to execute a plurality service applications. In order for this identification to take place, cloud manager 202 monitors, permits, deprecates, and advances these heterogeneous clouds to participate in execution of one or more of the plurality of service applications. Cloud manager 202 thus acts as a gateway for plurality of clouds 104 to participate in a heterogeneous cloud environment. This is further explained in detail in conjunction with FIG. 3.

An integration specifications module 204 defines an integration specification associated with an integration of one or more service applications across plurality of clouds 104. The integration specification includes one or more characteristics associated with it. To define the integration specifications, a resource provisioning module 206 identifies one or more resources that formulate or participate in each of plurality of clouds 104. Examples of a resource may include, but are not limited to devices, platforms, network, data sources, emergency vehicle, and cardio monitoring device, pacemaker, car dashboard, and location. These resources may either be created based on user-defined inputs, received via UI 114 through a user input interface 208, or based on pattern learning on existing or previous cognitive service applications. These resources may also be referred to as particles and have one or more properties associated with each of the entities. Examples of the entities may include, but are not limited to government, hospital, commercial organizations, product or service providers, and product or service consumers. Examples of the property association between hospital and pacemaker may include a monitoring of the heartbeat, whereas an example of property association between governments transportation department and car dashboard may include a speed. This is further explained in detail in conjunction with FIG. 3.

A dimension provisioning module 210 defines a plurality of dimensions that support integration of the one or more service applications across plurality of clouds 104. Dimension provisioning module 210 later associates the plurality of dimensions with one or more of plurality of clouds 104 and also with resources or particles identified for plurality of clouds 104. These dimensions and associations evolve based on changed or new characteristics in plurality of clouds 104. Examples of these changed or new characteristics may include, but are not limited to, SmartThings providers, service or product consumers, service or product providers, and types of resources. Dimensions and their associations may either be provisioned by a user via UI 112 through user input interface 208, or based on pattern learning on existing or previous cognitive service applications. This enables dimension provisioning module 210 provisioning multiple dimensions to constitute cognitive integration services for various types of real-life entities accessing plurality of clouds 104 for different purposes. This is further explained in detail in conjunction with FIG. 3.

Once one or more of the plurality of dimensions are associated with the one or more of plurality of clouds 104, association of one or more entities with the one or more service applications may be identified. As a result, integration of the one or more service applications with one or more of plurality of clouds 104 may be defined based on pattern learning or user input, where a user, via UI 112 through user input interface 208, specifies dimensions (along with sub-dimensions), association of dimensions to heterogeneous cloud, corresponding resources and association of participant entities to integration service applications. Thus, an integration specifications module 204 defines an integration specification which has one or more characteristics that include the one or more resources, the plurality of dimensions, and the one or more entities. This is further explained in detail in conjunction with FIG. 3.

Once the integration specification has been defined, a feature analytics engine 212 analyzes the one or more characteristics of the integration specifications to determine one or more logical binding features between the one or more service applications and plurality of clouds 104. The one or more logical binding features define relationship between the one or more service applications and plurality of clouds 104 and each logical binding feature includes a binding type and one or more binding parameters between a service application and a corresponding cloud. This is further explained in detail in conjunction with FIG. 3.

Based on the one or more logical binding features, a cloud classification engine 214 classifies plurality of clouds 104 for the one or more service applications. Cloud classification engine 214 uses a classification algorithm that is modelled to classify plurality of clouds 104 based on a binding type. A similarity analysis may be conducted on the one or more logical binding features to model the classification algorithm. The classification algorithm may be injected in memory 110 at runtime to perform the classification. Classifying plurality of clouds 104 includes grouping plurality of clouds 104 for the one or more service applications with respect to an entity from the one or more entities based on the one or more logical binding features. This is further explained in detail in conjunction with FIG. 3.

Once plurality of clouds 104 have been grouped, a resource properties setting module 216 analyzes resources associated with the grouping with respect to the entity to define one or more resource properties associated with the resources and the entity. A classification updating engine 218 then configures the resources of one or more of plurality of clouds 104, based on the one or more resource properties. Individual configurability of resources and devices within plurality of clouds 104 for the entity may be performed based on the one or more resource properties. To this end, configuration parameters for plurality of clouds 104 may be defined, updated, and modified to enable reconfiguration. These configuration parameters may include, but are not limited to, host information type, such as public/private/hybrid parameters, metadata, authorization parameters, and Uniform Resource Locators (URLs). This is further explained in detail in conjunction with FIG. 3.

In an embodiment, a cloud reconfiguration module 220 may detect a change in one or more of the binding type and the one or more binding parameters for a logical binding feature. Based on the detected change, plurality of clouds 104 may be dynamically reclassified to regroup plurality of clouds 104 with respect to an entity from the one or more entities. To this end, the classification algorithm may be updated to provide the classification algorithm injection at runtime to dynamically regroup the plurality of clouds 104 and their resources. This regroup is performed with respect to an individual entity or a set of entities.

A cloud policy module 222 identifies and enforces integration service policies for plurality of clouds 104 integrated with the one or more service applications. To this end, cloud policy module 222 may define, derive, manage, and enforce integration service policies for plurality of clouds 104 for their publishing, subscription, and dispatching across the system (or ecosystem). In an embodiment, a policy database (not shown in FIG. 2) may be maintained in real-time and updated with the latest versions of the aforementioned integration service policies, based on one or more heterogeneous clouds within the ecosystem. A cloud manager 222 executes the one or more service applications for one or more entities by integrating with plurality of clouds 104 that are heterogeneous.

Referring now to FIG. 3, a flowchart of a method for classification of heterogonous clouds, in accordance with an embodiment. FIG. 3 has been explained in conjunction with the elements of FIGs. 1 and 2.

At step 302, cloud classification device 106 identifies plurality of clouds 104 that are heterogeneous and are required to execute a plurality service applications. In order for this identification, cloud classification device 106 monitors, permits, deprecates, and advances these heterogeneous clouds to participate in execution of one or more of the plurality of service applications. Cloud classification device 106 thus acts as a gateway for plurality of clouds 104 to participate in a heterogeneous cloud environment. By way of an example, based on participating clouds, cloud classification device 106 may identify the following clouds: a healthcare cloud, a SmartCity cloud, an HR cloud, an loT cloud, a supply-chain cloud, a billing cloud, a government cloud, a commerce cloud, a logistics cloud, a robotics cloud, a transportation cloud, and a ServiceNxt cloud.

Thereafter, at 304, cloud classification device 106 defines an integration specification associated with integration of one or more service applications across plurality of clouds 104. The integration specification includes one or more characteristics associated with it. To define the integration specifications, first one or more resources that formulate or participate in each of plurality of clouds 104 are identified. Examples of a resource may include, but are not limited to devices, platforms, network, data sources, emergency vehicle, and cardio monitoring device, pacemaker, car dashboard, and location. These resources may either be created based on user-defined inputs, received via UI 114, or based on pattern learning on existing or previous cognitive service applications. These resources may also be referred to as particles and have one or more properties associated with each of the entities. Examples of the entities may include, but are not limited to government, hospital, commercial organizations, service or product providers, and service or product consumers. Examples of the property association between hospital and pacemaker may include a monitoring of the heartbeat, whereas an example of property association between governments transportation department and car dashboard may include a speed.

Thereafter, a plurality of dimensions that support integration of the one or more service applications across plurality of clouds 104 are defined. Defining the plurality of dimensions include storing and updating them in memory 110. These plurality of dimensions are later associated with one or more of plurality of clouds 104 and also with resources or particles identified for plurality of clouds 104. These dimensions and associations evolve based on changed or new characteristics in plurality of clouds 104. Examples of these changed or new characteristics include, but are not limited to, SmartThings providers, service or product consumers, service or product providers, and types of resources. Dimensions and their associations may either be provisioned by a user through UI 112 or based on a pattern learning on existing or previous cognitive service applications. This enables provisioning multiple dimensions to constitute cognitive integration services for various types of real-life entities accessing plurality of clouds 104 for different purposes.

Once one or more of the plurality of dimensions are associated with one or more of plurality of clouds 104, association of one or more entities with the one or more service applications may be identified. As a result, integration of the one or more service applications with one or more of plurality of clouds 104 may be defined based on pattern learning or user input, where a user, via UI 112, specifies dimensions (along with sub-dimensions), association of dimensions to heterogeneous cloud, and/or corresponding resources and association of participant entities to integration service applications. Thus, an integration specification is defined as one which has one or more characteristics that include the one or more resources, the plurality of dimensions, and the one or more entities.

By way of an example, a service application of 'heartbeat_monitoring,_ requires that a patients pacemaker needs to be monitored, when the patient is driving car on a highway. Such a monitoring may be required because the pacemaker may fail when car speed goes above 65 mph. The monitoring of pacemaker with respect to the speed of the car may be done by a hospital in a healthcare cloud. Further, such a monitoring may be performed while the car speed is monitored across a SmartCity cloud and policies are defined in a government cloud. Thus, the participating heterogeneous clouds for this service application may include, a healthcare cloud, a SmartCity cloud, an loT cloud, and/or a government cloud.

The resources formulating or participating in these clouds may include an emergency vehicle and a cardio monitoring device (for the healthcare cloud), a pacemaker (for the loT cloud), a car dashboard (for the SmartCity cloud), and/or a location (for the government Cloud). The entities involved may include transportation department and a local hospital. The dimensions that would support integration of this service application across plurality of clouds 104 may include type of devices, an alert severity, and/or a patient. These dimensions may be associated with the heterogeneous clouds and these associations may be represented as: loT cloud <-> type of device, SmartCity cloud <-> type of device, and healthcare cloud <-> patient. One or more entities may be associated with different service applications and :Type and 'Rules' may be defined for these associations to derive the following: Hospital_Monitoring_Association [Monitoring, Every 1 minute] (where, 'Monitoring' is the type and 'Every 1 minute' is the rule) for the local hospital and SmartCity_Monitoring_Association [Notification, Severity > 5] (where, 'Notification' is the type and 'Severity' > 5 is the rule] for transportation department.

Once the integration specification has been defined, at step 306, cloud classification device 106 analyzes the one or more characteristics of the integration specifications to determine one or more logical binding features between the one or more service applications and plurality of clouds 104. The one or more logical binding features define relationship between the one or more service applications and plurality of clouds 104 and each logical binding feature includes a binding type and one or more binding parameters between a service application and a corresponding cloud. In continuation of the example given above, one or more logical binding features may be represented using the Table 1 given below. A logical binding feature for the service application of "Heartbeat_Monitoring" may be represented as: Logical Binding Feature - [Service application, cloud, binding type, binding parameters]

**TABLE 1**

| **Logical Binding Feature** | **Representation** |
|---|---|
| Binding_Monitoring_TypeN_Device | [Heartbeat_Monitoring, Healthcare cloud, observation binding, Present reading of cardio device] |
| Binding_Monitoring_TypeN_Device | [Heartbeat_Monitoring, government cloud, observation binding, Current location of the patient] |
| Binding_Monitoring_TypeN_Device | [Heartbeat_Monitoring, loT cloud, Observation binding, present pacemaker pulse rate] |
| Binding_Monitoring_TypeN_Device | [Heartbeat_Monitoring, SmartCity cloud, observation binding, speed of car] |
| Binding_Monitoring_TypeN_Device | [Heartbeat_Monitoring, Healthcare Cloud, Affirmative Binding, [Dispatch Emergency Vehicle] |

Thereafter, based on the one or more logical binding features, cloud classification device 106, at step 308, classifies plurality of clouds 104 for the one or more service applications. Cloud classification device 106 uses a classification algorithm that is modelled to classify plurality of clouds 104 based on a binding type. A similarity analysis may be conducted on the one or more logical binding features to model the classification algorithm. The classification algorithm may be injected to perform the classification at runtime. This classification may be represented as: [Integration service, {clouds (participating resources)}, binding type]. In continuation of the example above, the classification may be represented by Table 2 given below.

**TABLE 2**

| **Classification Algorithm** | **Representation** |
|---|---|
| Monitoring_TypeN_D evice_Classification | [Heartbeat_Monitoring, {Healthcare Cloud (Cardio device for monitoring, emergency vehicle), loT cloud (Pacemaker), government cloud (location), SmartCity cloud (car, notification Engine)}, Binding_Monitoring_TypeN_Device: observation binding] |

Classifying plurality of clouds 104 includes grouping plurality of clouds 104 for the one or more service applications with respect to an entity from the one or more entities, based on the one or more logical binding features. In continuation of the example above, this grouping with respect to an entity may be represented as: Entity [Group {Clouds}] and for the entity :Hospital, may be depicted as: Hospital [Pacemaker_Heartbeat_Monitoring {Healthcare cloud, loT cloud, SmartCity cloud, Government cloud}].

Once plurality of clouds 104 have been grouped, cloud classification device 106 analyzes resources associated with the grouping with respect to the entity to define one or more resource properties associated with the resources and the entity. The speed reading from the car dashboard and heartbeats reading from the pacemaker are the example of resources property. Cloud classification device 106 then configures the resources one or more of plurality of clouds 104, based on the one or more resource properties. Individual configurability of resources and devices within plurality of clouds 104 for the entity may be performed based on the one or more resource properties. To this end, configuration parameters for plurality of clouds 104 may be defined, updated, and modified to enable reconfiguration. These configuration parameters may include, but are not limited to host information, public/private/hybrid parameters, metadata, authorization parameters, and Uniform Resource Locators (URLs). In continuation of the example above, resource parameters for the SmartCity cloud and the government cloud may be reconfigured. This may be represented as: SmartCity Cloud [Speed limit of car] (where :speed limit of car is the resource parameter) and government cloud [Miles Per Hour (MPH) Limit, Patient Privacy Act #2].

In an embodiment, cloud classification device 106 may detect a change in one or more of the binding type and the one or more binding parameters for a logical binding feature. Based on the detected change, plurality of clouds 104 may dynamically be reclassified to regroup plurality of clouds 104 with respect to an entity from the one or more entities, at step 310. To this end, the classification algorithm may be updated to provide the classification algorithm injection at runtime to dynamically regroup plurality of clouds 104 and their resources. This regroup is performed with respect to an individual entity or a set of entities.

Cloud classification device 106, at step 312, identifies and enforces integration service policies for plurality of clouds 104 integrated with the one or more service applications. To this end, cloud classification device 106 may define, derive, manage, and enforce integration service policies for plurality of clouds 104 for their publishing, subscription, and dispatching across the system (or ecosystem). Policy database (not shown in FIG. 2) are maintained in real-time and updated with the latest versions of the aforementioned integration service policies based on one or more heterogeneous clouds within the ecosystem. In continuation of the example above, for the healthcare cloud, one of the integration service policies may be represented as: Healthcare Cloud {Heartbeat_Monitoring [Every 1 minute, > 65 MPH for notification, Dispatch emergency vehicle in 15 minutes of alert]}. Cloud classification device 106, at step 314, executes the one or more service applications for one or more entities by integrating with plurality of clouds 104 that are heterogeneous. In continuation of the example above, for the entity of Hospital the execution of the service application of :Heartbeat_Monitoring by integrating with multiple clouds may be represented as: Hospital [Heartbeat_Monitoring {Healthcare cloud, SmartCity cloud, loT cloud, Government cloud}].

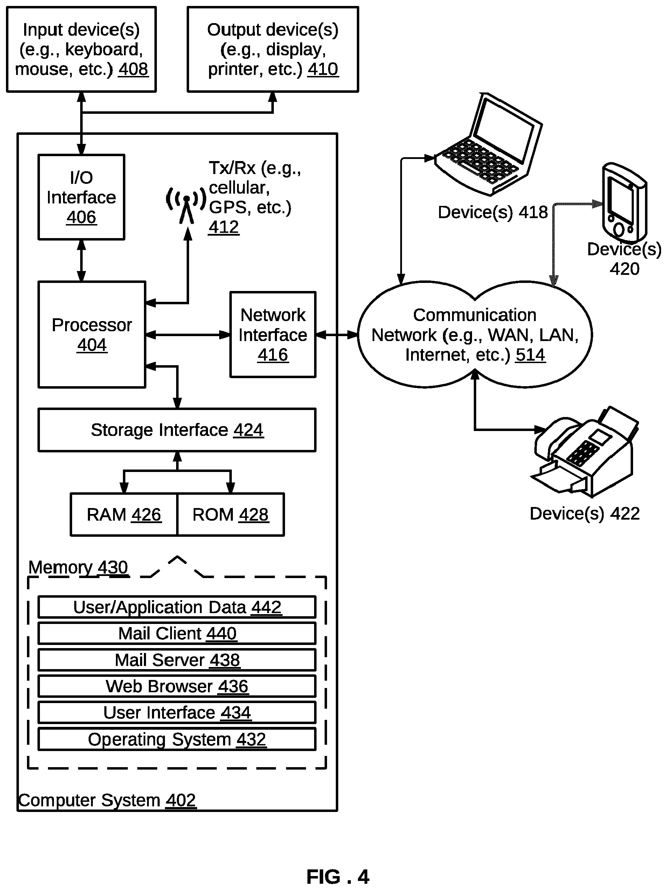

FIG. 4 is a block diagram of an exemplary computer system for implementing various embodiments. Computer system 402 may comprise a central processing unit ('CPU or 'processor) 404. Processor 404 may comprise at least one data processor for executing program components for executing user- or system-generated requests. A user may include a person, a person using a device such as such as those included in this disclosure, or such a device itself. Processor 404 may include specialized processing units such as integrated system (bus) controllers, memory management control units, floating point units, graphics processing units, digital signal processing units, etc. The processor may include a microprocessor, such as AMD Athlon, Duron or Opteron, ARMs application, embedded or secure processors, IBM PowerPC, Intels Core, Itanium, Xeon, Celeron or other line of processors, etc. Processor 404 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 404 may be disposed in communication with one or more input/output (I/O) devices via an I/O interface 406. I/O interface 406 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 406, computer system 402 may communicate with one or more I/O devices. For example, an input device 408 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 410 may be a printer, fax machine, video display (e.g., cathode ray tube (CRT), liquid crystal display (LCD), light-emitting diode (LED), plasma, or the like), audio speaker, etc. In some embodiments, a transceiver 412 may be disposed in connection with processor 404. Transceiver 412 may facilitate various types of wireless transmission or reception. For example, transceiver 412 may include an antenna operatively connected to a transceiver chip (e.g., Texas Instruments WiLink WL1283, Broadcom BCM4550IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 404 may be disposed in communication with a communication network 414 via a network interface 416. Network interface 416 may communicate with communication network 414. Network interface 416 may employ connection protocols including, without limitation, direct connect, Ethernet (e.g., twisted pair 50/500/5000 Base T), transmission control protocol/internet protocol (TCP/IP), token ring, IEEE 802.11 a/b/g/n/x, etc. Communication network 414 may include, without limitation, a direct interconnection, local area network (LAN), wide area network (WAN), wireless network (e.g., using Wireless Application Protocol), the Internet, etc. Using network interface 416 and communication network 414, computer system 402 may communicate with devices 418, 420, and 422. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, computer system 402 may itself embody one or more of these devices.

In some embodiments, processor 404 may be disposed in communication with one or more memory devices (e.g., RAM 426, ROM 428, etc.) via a storage interface 424. Storage interface 424 may connect to memory 430 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory 430 may store a collection of program or database components, including, without limitation, an operating system 432, a user interface 434, a web browser 436, a mail server 438, a mail client 440, a user/application data 442 (e.g., any data variables or data records discussed in this disclosure), etc. Operating system 432 may facilitate resource management and operation of computer system 402. Examples of operating system 432 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 434 may facilitate display, execution, interaction, manipulation, or operation of program components through textual or graphical facilities. For example, user interfaces may provide computer interaction interface elements on a display system operatively connected to computer system 402, such as cursors, icons, check boxes, menus, scrollers, windows, widgets, etc. Graphical user interfaces (GUIs) may be employed, including, without limitation, Apple Macintosh operating systems Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 402 may implement web browser 436 stored program component. Web browser 436 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 402 may implement mail server 438 stored program component. Mail server 438 may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, computer system 402 may implement mail client 440 stored program component. Mail client 440 may be a mail viewing application, such as Apple Mail, Microsoft Entourage, Microsoft Outlook, Mozilla Thunderbird, etc.

In some embodiments, computer system 402 may store user/application data 442, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments provide a method and device for classification of heterogeneous cloud. The cloud classification not only supports association with specific entities (government, commercial organizations, loT device providers, and SmartThings integrator) which need to group clouds according to cloud types based on their integration predicament, but also provides necessary information to implement different operations to generate integrated cloud microphysical environment. Classification algorithms are injected based on different dimensions, resources/ participants, and physical features for cloud classification. Classification is performed on the set of clouds, and cloud resources (including loT devices) are managed/configured based on classified set of clouds. Algorithms are derived based on changing needs of entities rather than vector based similarities. As a result, the method and device enable the following: predictable behavior and integration between various resources and their consumers within the heterogeneous cloud environment, configuration based diversification in utilization of the integration services of heterogeneous clouds, efficient resource management, governance, and allocation across various types of entities (government, commercial organizations, SmartThings providers, etc.), increased maintainability across channels and connectivity for the service providers of diversified entities, and governance across heterogeneous clouds (government cloud, healthcare cloud, manufacturing cloud).

The specification has described method and device for classification of heterogeneous cloud. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term 'computer-readable medium should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for classification of heterogeneous computing clouds, the method comprising:
identifying, by a computing cloud classification device, a plurality of computing clouds required to execute a plurality of service applications, wherein the plurality of computing clouds corresponds to a heterogeneous computing cloud;
defining, by the computing cloud classification device, an integration specification comprising at least one characteristic associated with integration of at least one service application from the plurality of service applications with the plurality of computing clouds;
analyzing, by the computing cloud classification device, the at least one characteristic of the integration specification to determine at least one logical binding feature between the at least one service application and the plurality of computing clouds; and
classifying, by the cloud classification device, the plurality of computing clouds for the at least one service application based on the at least one logical binding feature.

2. The method of claim 1, wherein the plurality of computing clouds comprise a healthcare computing cloud, a smart city computing cloud, a human resource (HR) computing cloud, an Internet of Things (IoT) computing cloud, a supply-chain computing cloud, a billing computing cloud, a government computing cloud, a logistics computing cloud, a commerce computing cloud, a robotics computing cloud, a transportation computing cloud, and/or a service next computing cloud.

3. The method of claim 1 or 2, wherein defining the integration specification comprises:
identifying at least one resource participating in each of the plurality of computing clouds;
defining a plurality of dimensions that support integration of the at least one service application with the plurality of computing clouds, wherein defining comprises storing and updating the plurality of dimensions;
associating at least one of the plurality of dimensions with each of the plurality of computing clouds; and
identifying association of at least one entity with the at least one service application, wherein an entity is associated with at least one of the plurality of computing clouds.

4. The method of claim 3, wherein the at least one characteristic comprises at least one of the at least one resource, the plurality of dimensions, the at least one entity, or the identified association between them.

5. The method of claim 3 or 4, wherein classifying the plurality of computing clouds comprises grouping the plurality of computing clouds for the at least one service application with respect to an entity from the at least one entity, based on the at least one logical binding feature with respect to the at least one resource and at least one resource property.

6. The method of claim 5, further comprising:
analyzing resources associated with the grouping of the plurality of computing clouds with respect to the entity, to define at least one resource property associated with the resources and the entity in real-time; and
configuring the resources based on the at least one resource property.

7. The method of any preceding claim, wherein the at least one logical binding feature defines relationship between the at least one service application and the plurality of computing clouds, the at least one logical binding feature comprises a binding type and at least one binding parameter.

8. The method of claim 7, further comprising detecting a change in at least one of the binding type and the at least one binding parameter.

9. The method of claim 8, further comprising dynamically reclassifying the plurality of computing clouds based on the change, wherein the reclassification comprises dynamically regrouping of the plurality of computing clouds.

10. The method of any preceding claim, further comprising identifying and enforcing integration service policies for the plurality of computing clouds integrated with the at least one service application.

11. A computing cloud classification device for classification of heterogeneous computing clouds, the computing cloud classification device comprising:
a processor; and
a memory communicatively coupled to the processor, wherein the memory stores processor instructions, which, on execution, causes the processor to perform the method of any preceding claim.

12. A non-transitory computer-readable storage medium having stored thereon, a set of computer-executable instructions causing a computer comprising one or more processors to perform steps comprising the method of any of claims 1 - 10.
